# EUROPEAN PATENT APPLICATION

(11) **EP 1 956 478 A2**
(43) Date of publication of application: **13.08.2008**
(21) Application number: 08100952.4
(22) Date of filing: 25.01.2008
(51) Int. Cl.: G06F 3/14

(54) **Display apparatus and image output method thereof**

(30) Priority: 06.02.2007 KR 20070012262
(71) Applicant: Samsung Electronics Co., Ltd, Suwon-si, Gyeonggi-do 443-742 (KR)
(72) Inventor: Kim, Young-chan, Gyeonggi-do (KR)
(74) Representative: Grootscholten, Johannes A.M.

(57) **Abstract**

A display apparatus includes: a display unit; an image processor which includes a plurality of scalers to process an image signal; an output unit which outputs an image according to the processed image signal to an external display apparatus; and a controller which controls the plurality of scalers to independently process the image signal and output a plurality of images, each having a different property, on at least one of the display unit and the output unit.

## Description

### BACKGROUND

### Field of the Invention

Apparatuses and methods consistent with the present invention relate to a display apparatus and an image output method thereof, and more particularly, to a display apparatus that outputs an image having various properties and an image output method thereof.

### Description of the Related Art

A display apparatus outputs an image based on an image signal. In more detail, the display apparatus outputs the image to a display unit or an external display apparatus through a scaling process of an input image signal.

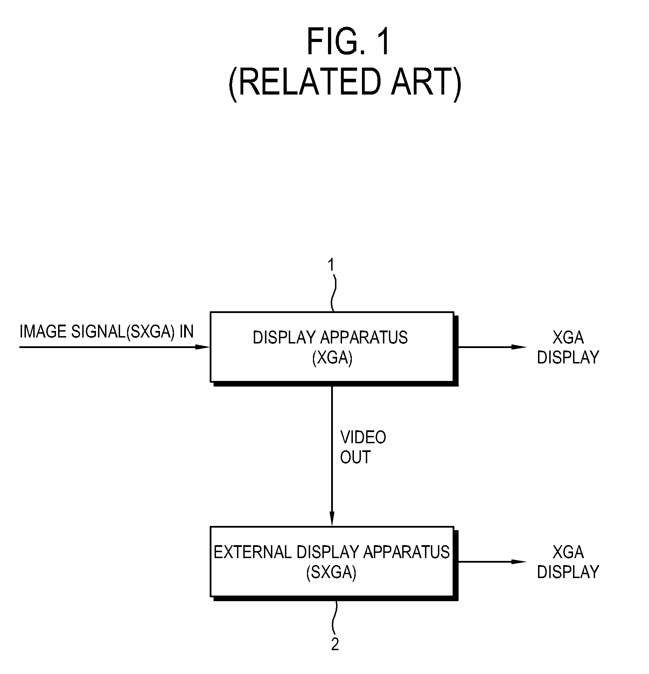

FIG. 1 shows a configuration of a conventional display apparatus. As shown in FIG. 1, the conventional display apparatus 1 receives an image signal and outputs an image, and may output the image to at least one external display apparatus 2 using an output terminal through which the image is output.

However, since the conventional display apparatus 1 forwards the image that the conventional display apparatus 1 processes and displays to the external display apparatus 2, when a resolution (e.g., SXGA) of the external display apparatus 2 is greater than a resolution (e.g., XGA) of the display apparatus 1, the image displayed on the external display apparatus 2 does not correspond to the resolution of the external display apparatus 2.

In addition, properties of the image being displayed on the external display apparatus 2, such as frequency of the image, and location and size of a region of which the image is to be displayed cannot be variably set according to the external display apparatus 2.

The above information disclosed in this Background section is only for enhancement of understanding of the background of the invention and therefore it may contain information that does not form the prior art that is already known in this country to a person of ordinary skill in the art.

### SUMMARY

Accordingly, it is an aspect of the present invention to provide a display apparatus and an image output method of independently processing an image signal, thereby outputting an image appropriate for an external display apparatus.

Additional features of the invention will be set forth in the description which follows, and in part will be apparent from the description, or may be learned by practice of the invention.

The foregoing and/or other aspects of the present invention can be achieved by providing a display apparatus including: a display unit; an image processor which includes a plurality of scalers to process an image signal; an output unit which outputs an image according to the processed image signal to an external display apparatus; and a controller which controls the plurality of scalers to independently process the image signal and output a plurality of images, each having a different property, on at least one of the display unit and the output unit.

According to an aspect of the invention, the property includes at least one of a size and location of a region of which the image is displayed, resolution of the image, and frequency of the image.

According to an aspect of the invention, the display apparatus further includes a user input unit, wherein the controller receives the property of the image through the user input unit.

According to an aspect of the invention, the display apparatus further includes a user interface (UI) generator, wherein the controller controls the UI generator to generate a UI through which the property of the image is input.

According to an aspect of the invention, the display apparatus further includes a communication unit which communicates with an external computer, wherein the controller controls the communication unit to receive at least one of the image signal and information on the property of the image from the external computer.

The foregoing and/or other aspects of the present invention can be achieved by providing a display apparatus including: a display unit; an image processor which includes a plurality of scalers which process an image signal; an output unit which outputs an image according to the processed image to an external display apparatus; and a controller which controls the plurality of scalers to independently process the image signal and output an image with fixed resolution to the display unit and an image with arbitrary resolution to the output unit.

The foregoing and/or other aspects of the present invention can be achieved by providing an image output method of a display apparatus having a display unit and an output unit which outputs an image to an external display apparatus, the image output method including: independently processing an image signal by a plurality of scalers; and outputting a plurality of images, each having a different property, to at least one of the display unit and the output unit according to the processing of the image signal.

According to an aspect of the invention, the property includes at least one of a size and location of a region of which the image is displayed, resolution of the image, and frequency of the image.

According to an aspect of the invention, the processing of the image signal further includes receiving the property of the image, wherein the image signal is processed according to the received property.

According to an aspect of the invention, the receiving of the property of the image further includes generating a user interface (UI) through which the property of the image is received, and receiving the image property through the UI.

According to an aspect of the invention, the processing of the image signal further includes receiving at least one of an image signal to be processed and information on the property of the image from an external computer.

### BRIEF DESCRIPTION OF THE DRAWINGS

The above and/or other aspects of the prevent invention will become apparent and more readily appreciated from the following description of the exemplary embodiments, taken in conjunction with the accompanying drawings, in which:
FIG. 1 is a block diagram of a conventional display apparatus;
FIG. 2 is a block diagram of a display apparatus according to a first exemplary embodiment of the present invention;
FIG. 3 is a block diagram of a display apparatus according to a second exemplary embodiment of the present invention;
FIG. 4A and FIG. 4B show a user interface of the display apparatus according to the second exemplary embodiment of the present invention;
FIG. 5 is a flowchart of an image output method of a display apparatus according to the present invention; and
FIG. 6 is a flowchart of an image output method of a display apparatus according to another exemplary embodiment of the present invention.

### DETAILED DESCRIPTION OF EXEMPLARY EMBODIMENTS OF THE INVENTION

Reference will now be made in detail to the embodiments of the present invention, examples of which are illustrated in the accompanying drawings, wherein like reference numerals refer to like elements throughout. The exemplary embodiments are described below so as to explain the present invention by referring to the figures.

Hereinafter, a display apparatus 100 according to the exemplary embodiment of the present invention will be described in further detail with reference to the accompanying drawings.

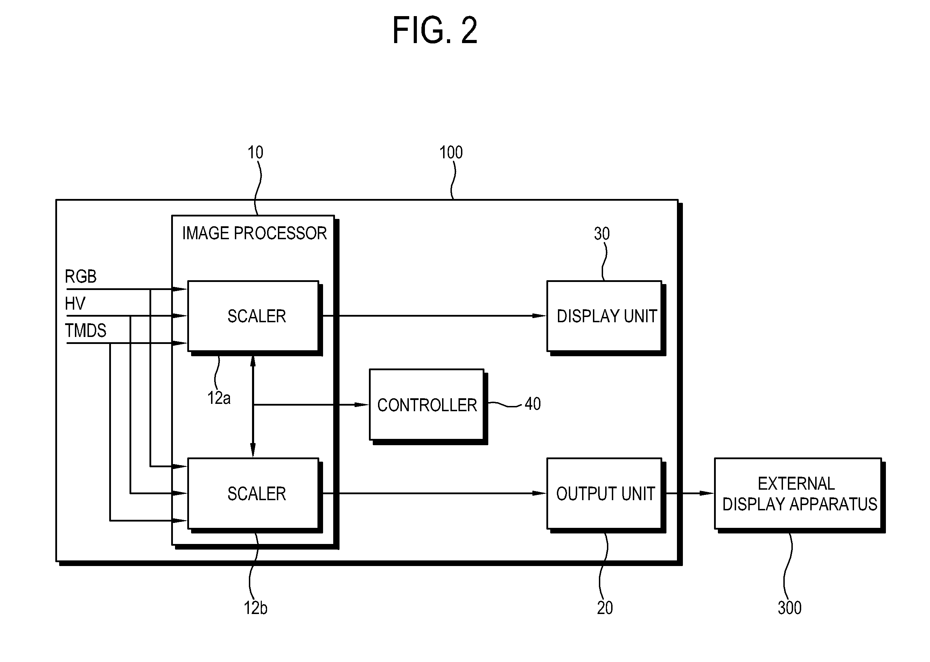

FIG. 2 is a block diagram of a display apparatus 100 according to a first exemplary embodiment of the present invention. As shown in FIG. 2, the display apparatus 100 includes an image processor 10, an output unit 20, a display unit 30, and a controller 40.

The image processor 10 processes an image signal for outputting an image. The image processor 10 according to the first exemplary embodiment of the present invention can perform decoding for extracting image information from an input image signal and a picture enhancement processing for improving image quality, and includes a plurality of scalers 12 for adjusting resolution and frequency of the decoded image according to a user's setting. The image signal input to the image processor 10 includes an RGB signal and a transition minimized differential signaling (TMDS) signal, and the image signal is input to each scaler 12.

The output unit 20 outputs the image processed by the image processor 10 to the outside and may be realized as an output terminal.

The display unit 30 displays an image based on the image signal processed by the image processor 10. The display unit 30 may be realized in the different types of display devices such as a cathode ray tube (CRT), a liquid crystal display (LCD), a plasma display panel (PDP), a digital light processing (DLP), a surface-conduction electron-emitter display (SED), and a field emission display (FED).

The controller 40 controls the image processor 10 to independently process the image signal and output a plurality of images, each having a different property. The controller 40 according to the first exemplary embodiment of the present invention may be realized as a micro controller unit (MCU).

The controller 40 calculates a scale factor for the plurality of scalers 12 to scale the output image according to resolution, and frequency of the output image, the size of an area where the output image is displayed, and a location of the displayed image. Then, the controller 40 controls the image processor 10 to process the image signal according to the calculated scale factor. A scaling algorithm used for such an image processing is the same as an algorithm used for processing an output image in a typical display apparatus such as an LCD monitor.

For example, when the display apparatus 100 supports extended graphics array (XGA) resolution and the external display apparatus 200 supports super XGA (SXGA) resolution, the controller 40 controls the scaler 12a to process the image signal according to the XGA resolution and displays the corresponding image on the display unit 30, and controls the scaler 12b to process the image signal according to the SXGA resolution to output the corresponding image through the output unit 20.

When the display apparatus 100 supports 70Hz frequency and the external display apparatus 200 supports 85Hz frequency, the controller 40 controls the scaler 12a to process the image signal according to 70Hz and displays the corresponding image on the display unit 30, and controls the scaler 12b to process the image signal according to the 85Hz frequency and outputs the corresponding image through the output unit 20.

In addition, the controller 40 may control the scaler 12a to output an image with fixed resolution on the display unit 30 and control the scaler 12b to output an image with arbitrary resolution to the output unit 20.

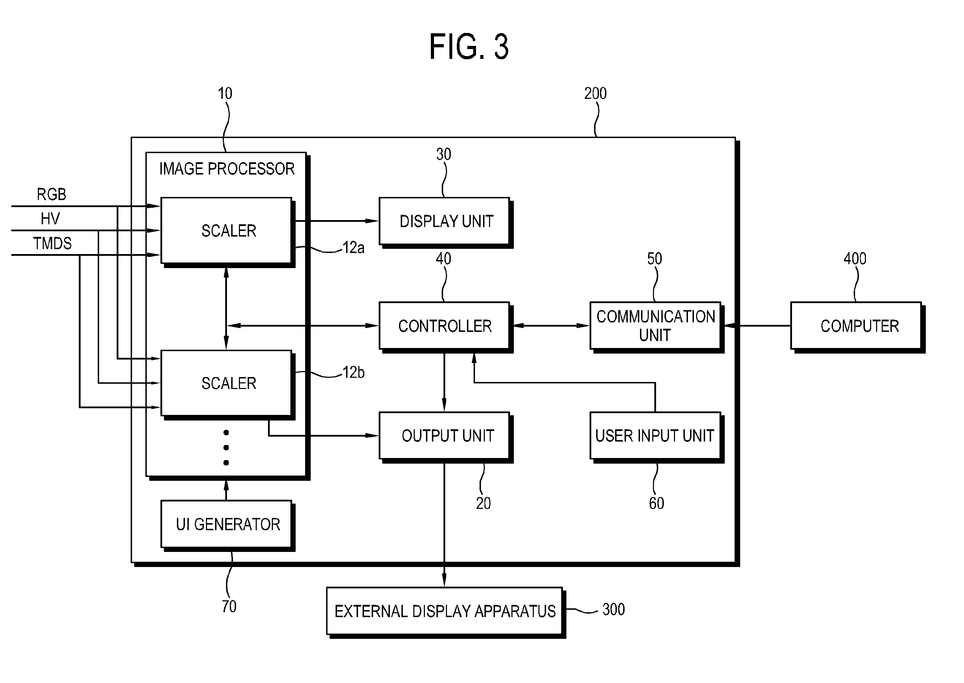

Hereinafter, a display apparatus 200 according to a second exemplary embodiment of the present invention will be described with reference to FIG. 3. As shown in FIG. 3, the display apparatus 200 according to the second exemplary embodiment of the present invention further includes a communication unit 50, a user input unit 60, and a user interface (UI) generator 70 in addition to the constituent elements of the display apparatus 100.

The communication unit 50 communicates with an external computer 400. The communication unit 50 according to the second exemplary embodiment of the present invention may communicate through a display data channel (DDC) line.

The controller 40 can control the communication unit 50 to receive an image signal from an external computer 400, and controls the communication unit 50 to receive information on proprieties of an image, such as a size and location of a region of which the image is to be displayed, resolution of the image, and frequency of the image.

Here, a user may input the properties of the image, or the image properties through an application program installed in the external computer 400. When information on the properties of the image is input from the external computer 400, the controller 40 controls the communication unit 50 to receive the image property information and controls the image processor 10 to output an image according to the received information.

The user input unit 60 receives image properties from the user. The user input unit 60 according to the second exemplary embodiment of the present invention is provided in one side of a main body of the display apparatus 200, and may include a menu key and a key signal generator for generating a key signal corresponding to a key operation. The user input unit 60 may also be provided as a wireless remote controller.

The UI generator 70 generates a UI for receiving image properties. Although it is illustrated in FIG. 3 that the UI generator 70 is included in the display apparatus 200, the UI generator 70 may be included in the external computer 400. The controller 40 may receive a UI generated from the external computer 400 through the communication unit 50 and display the UI on the display unit 30.

Here, the display apparatus 200 may be connected with a plurality of external display apparatuses 300, and a plurality of scalers 12 included in the image processor 10 may respectively correspond to images output to the external display apparatus 300.

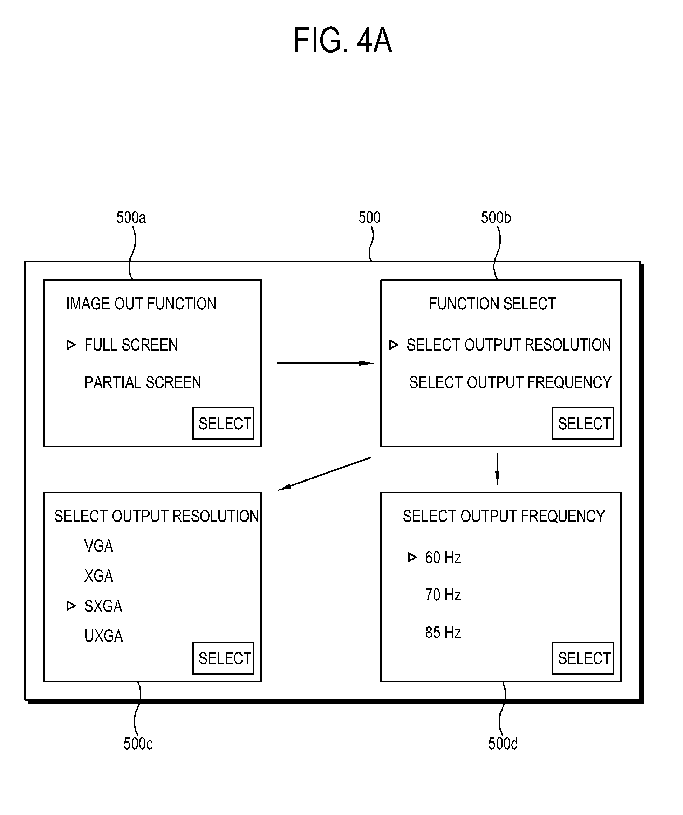

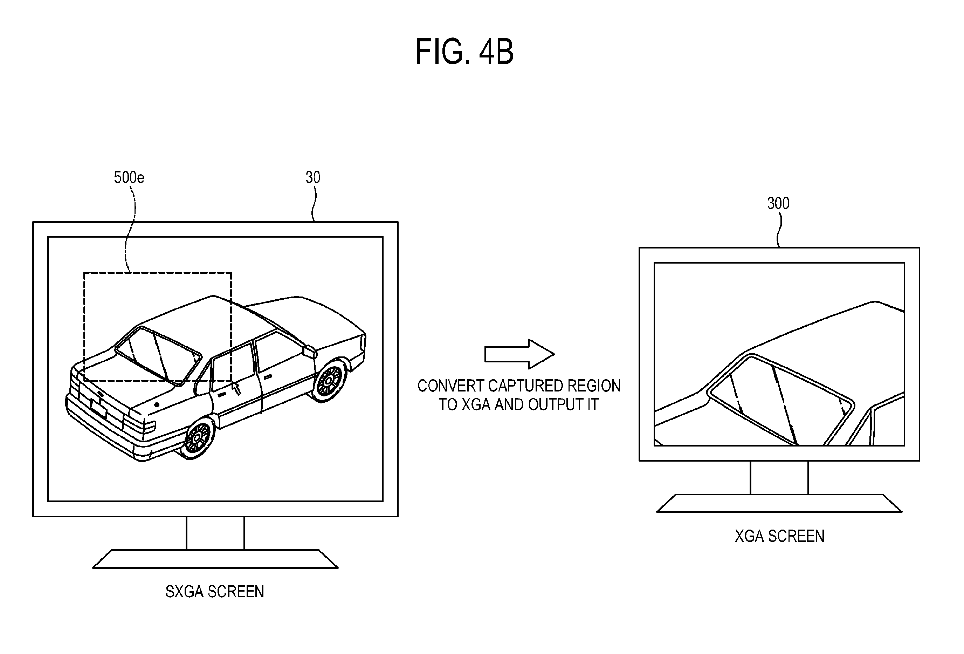

FIG. 4A and FIG. 4B show a user interface 500 of the display apparatus 200 according to the second exemplary embodiment of the present invention. As shown in FIG. 4A, the user interface 500 includes a screen selection interface 500a for selecting an output screen to be displayed, a function selection interface 500b for selecting one of resolution and frequency of an image to be output, a resolution interface 500c for selecting resolution for the image, and a frequency interface 500d for selecting frequency of the image.

Although it is not shown in the accompanying drawings, the display apparatus 200 may further include an interface for selecting an external display apparatus 300 when a plurality of the display devices 300 is connected to the display apparatus 200.

FIG. 4B shows a region selection interface 500e for selecting the size and location of a region whose image is to be displayed when a partial screen is selected through the screen selection interface 500a. The controller 40 receives the size and location of the region whose image is to be displayed in accordance with an input through a direction key or a predetermined selection key provided in the user input unit 60. Therefore, the controller 40 can control the scaler 12 to output an enlarged image according to the input region and size, and output the image according to the resolution and frequency input through the resolution interface 500c and frequency interface 500d.

As described above, the user interface shown in FIG. 4A and FIG. 4B may be generated in the external computer 400 and receive image properties from the computer 400.

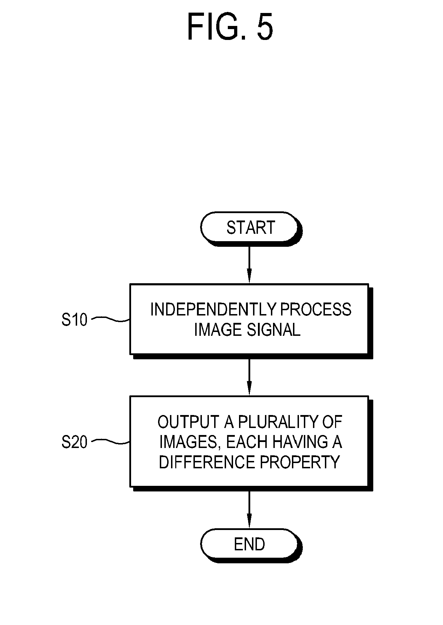

Hereinafter, an image output method of the display apparatuses 100 and 200 according to an exemplary embodiment of the present invention will be described in further detail with reference to FIG. 5.

First, the controller 40 controls the image processor 10 to independently process an image signal, at operation of S10. The operation of S10 may further include receiving information on at least one of an image signal and an image property which are needed for image processing from the external computer 400.

In addition, the image processing may be performed by the plurality of scalers 12 included in the image processor 10 at the operation of S10, and the image processing can be performed in accordance with the image property input through the user interface 500.

At operation of S20, the controller 40 outputs a plurality of images, each having a difference property according to the image processing performed at the operation of S10. Here, the operation of S20 may further include outputting at least one of the plurality of images to the output unit 20 or displaying the at least one image on the display unit 30.

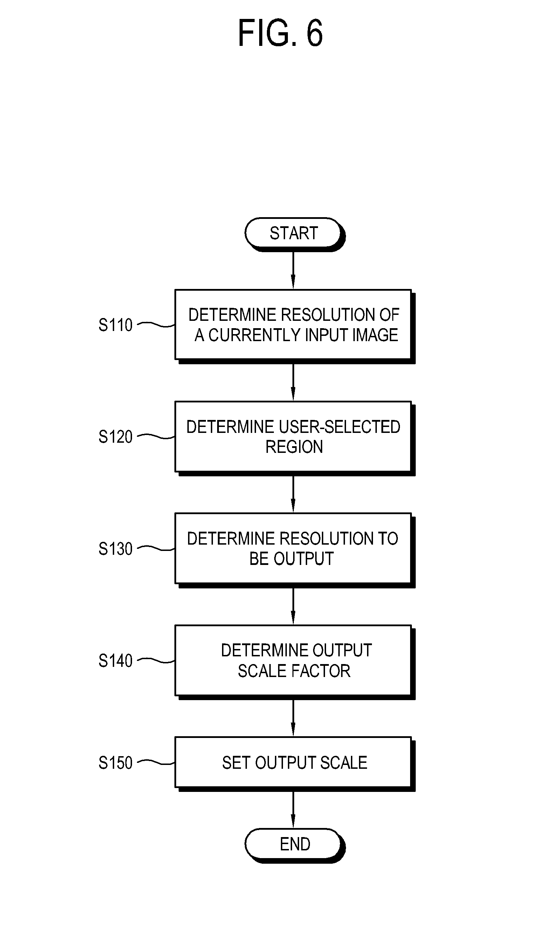

FIG. 6 is a flowchart of an image outputting method of the display apparatuses 100 and 200 according to another exemplary embodiment of the present invention.

The controller 40 determines resolution of an image being inputted, at operation of S110. Then, the controller 40 determines an image of a region selected by the user among the image displayed on the display unit 30, at operation of S120. In addition, the controller 40 determines resolution of the image to be output to the output unit 20 or the display unit 30, at operation of S130.

Then, the controller 40 determines an output scale factor for the scaler 12 to perform image processing according to the resolution determined at the operation of S130, at operation of S140. In addition, the controller 40 sets an output scale, at operation of S150.

As described above, a display apparatus and an image output method of independently processing an image signal, thereby outputting an image appropriate for an external display apparatus, can be provided.

In addition, image properties such as a location and size of a region whose image is to be displayed can be variably set when the image is output to the external display apparatus.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A display apparatus comprising:
a display unit;
an image processor which includes a plurality of scalers to process an image signal;
an output unit which outputs an image according to the processed image signal to an external display apparatus; and
a controller which controls the plurality of scalers to independently process the image signal and output a plurality of images, each having a different property, on at least one of the display unit and the output unit.

2. The display apparatus of claim 1, wherein the property includes at least one of a size and location of a region of which the image is displayed, resolution of the image, and frequency of the image.

3. The display apparatus of claim 2, further comprising a user input unit,
wherein the controller receives the property of the image through the user input unit.

4. The display apparatus of claim 1, further comprising a user input unit,
wherein the controller receives the property of the image through the user input unit.

5. The display apparatus of claim 4, further comprising a user interface (UI) generator,
wherein the controller controls the UI generator to generate a UI through which the property of the image is input.

6. The display apparatus of claim 3, further comprising a user interface (UI) generator,
wherein the controller controls the UI generator to generate a UI through which the property of the image is input.

7. The display apparatus of claim 1, further comprising a communication unit which communicates with an external computer,
wherein the controller controls the communication unit to receive at least one of the image signal and information on the property of the image from the external computer.

8. A display apparatus comprising:
a display unit;
an image processor which includes a plurality of scalers which process an image signal;
an output unit which outputs an image according to the processed image to an external display apparatus; and
a controller which controls the plurality of scalers to independently process the image signal and output an image with fixed resolution to the display unit and an image with arbitrary resolution to the output unit.

9. An image output method of a display apparatus having a display unit and an output unit which outputs an image to an external display apparatus, the image output method comprising:
independently processing an image signal by a plurality of scalers; and
outputting a plurality of images, each having a different property, to at least one of the display unit and the output unit according to the processing of the image signal.

10. The image output method of claim 9, wherein the property includes at least one of a size and location of a region of which the image is displayed, resolution of the image, and frequency of the image.

11. The image output method of claim 10, wherein the processing of the image signal further comprises receiving the property of the image,
wherein the image signal is processed according to the received property.

12. The image output method of claim 9, wherein the processing of the image signal further comprises receiving the property of the image,
wherein the image signal is processed according to the received property.

13. The image output method of claim 12, wherein the receiving of the property of the image further comprises generating a user interface (UI) through which the property of the image is received, and
receiving the image property through the UI.

14. The image output method of claim 11, wherein the receiving of the property of the image further comprises generating a user interface (UI) through which the property of the image is received, and receiving the image property through the UI.

15. The image output method of claim 9, wherein the processing of the image signal further comprises receiving at least one of an image signal to be processed and information on the property of the image from an external computer.

16. The image output method of claim 9, wherein the plurality of images have at least different resolutions.

17. The image output method of claim 9, wherein the plurality of images have at least different refresh rates.

18. The image output method of claim 16, wherein the image outputted to the output unit has a greater resolution than the image outputted to the display unit.

19. The image output method of claim 17, wherein the image outputted to the output unit has greater refresh rate then the image outputted to the display unit.

20. The image output method of claim 9, wherein the display apparatus is a flat type digital display.
